# EUROPÄISCHE PATENTSCHRIFT

(11) **EP 0 950 959 B1**
(45) Veröffentlichungstag und Bekanntmachung des Hinweises auf die Patenterteilung: **12.08.2015**
(21) Anmeldenummer: 99440058.8
(22) Anmeldetag: 19.03.1999
(51) Int. Cl.: G06F 15/78

(54) **Integrierte Schaltung**
Integrated circuit
Circuit intégré

(30) Priorität: 17.04.1998 DE 19817024
(43) Veröffentlichungstag der Anmeldung: 20.10.1999
(73) Patentinhaber: STMicroelectronics Srl, 20864 Agrate Brianza (IT)
(72) Erfinder: Matt, Hans Jürgen, Dr., 71686 Remseck (DE); Kopp, Dieter, 75428 Illingen (DE); Trompf, Michael, Dr., 71296 Heimsheim (DE); Späth, Stefan, 71272 Renningen (DE)
(74) Vertreter: Hirsch, Peter

(56) Entgegenhaltungen:
- WO-A-97/25670
- GB-A- 2 311 882
- US-A- 5 333 320
- US-A- 5 487 153

## Beschreibung

Die Erfindung bezieht sich auf eine integrierte Schaltung nach dem Oberbegriff des Patentanspruchs 1. Eine solche integrierte Schaltung dient insbesondere dazu Daten zu bearbeiten, z.B. Filterung, Transformation und/oder Modulation von Daten.

Eine aus Proceedings of the 5th Internationals Conference on Signal Processing Applications and Technology, vol.1, 1994, p.85-90 bekannte Anordnung sieht vor, einen digitalen Signalprozessor für verschiedene Sprachkodierungsanwendungen als Kern eines ASICs zu verwenden. Der digitale Signalprozessor wird u.a. für Routineanwendungen benutzt, die auch von separaten Modulen durchführbar wären, die ausschließlich nach speziellen, voneinander unterschiedlichen Operationsvorschriften arbeiten und die speziellen Routineaufgaben mit weniger Aufwand als der digitale Signalprozessor ausführen können. Durch die Routineanwendungen werden im digitalen Signalprozessor unnötig ca. 25% seiner Rechenkapazität belegt. Aber selbst wenn die Routineaufgaben allesamt in separaten Modulen durchgeführt würden, so verbliebe für den digitalen Signalprozessor immernoch die Aufgabe den Datenverkehr von und zu den Modulen zu steuern, was seine Rechenkapazität weiterhin beeinträchtigen würde. Beispielsweise dient der digitale Signalprozessor oftmals nur als Relaisstation, wenn beipielsweise meherere Module sequentiell durchlaufen werden müssen, die Datenpakete aber zentral koordiniert vom digitalen Signalprozessor zu Modul 1 gesendet, von Modul 1 empfangen, zu Modul 2 gesendet, von Modul 2 empfangen, zu Modul 3 gesendet, ... werden. Die Rechenkapazität des digitalen Signalprozessors wird in ASICs Hauptsächlich für spezielle, kundenorientierte Anwendungen benötigt.

In GB 2311882 ist ein Datenverarbeitungsmanagementsystem zum Ausführen unabhängiger Anweisungs-Threads beschrieben. Dieses umfasst eine Mehrzahl von Dateneingaben und Datenausgaben, sowie eine Mehrzahl von Datenverarbeitungseinrichtungen und eine Steuereinrichtung. Die Steuereinrichtung leitet Daten zwischen einer ausgewählten Dateneingabe, einer ausgewählten Datenausgabe, einer ausgewählten Datenverarbeitungseinrichtung und einem Datenspeicher in einem oder mehreren auswählbaren Leitvorgängen. Sie veranlasst außerdem, dass die ausgewählte Datenverarbeitungseinrichtung, gestützt auf einen ausgewählten Anweisungs-Thread, einen von einer Anzahl vorbestimmter Datenverärbeitungsvorgänge beginnt, und bestimmt zudem, welche Leitvorgänge und welche Datenverarbeitungsvorgänge durchgeführt werden.

WO 93/21574 beschreibt einen Computer, der imstande ist, sowohl Videodaten als auch graphische Daten anzuzeigen, und eine Zentraleinheit (cental processing unit), einen Speicher-Controller und ein Display-System aufweist. Diese Einheiten sind alle an einen Bus angeschlossen. Modulare funktionale Einheiten, z.B. Video-Codecs, N-Ausgänge, Audio-Subsysteme werden verwendet, um optionale zusätzliche Funktionen für das Display-System bereitzustellen. Eine Kopplungseinrichtung ist vorgesehen, um die modularen funktionalen Einheiten mit dem Display-System und dem Speicher-Controller zu verbinden. Der Speicher-Controller kann optional einen Router beinhalten.

Es ist daher Aufgabe der Erfindung die Ausnutzung der Rechenkapazität eines Prozessors einer integrierten Schaltung zu optimieren.

Gelöst wird diese Aufgabe durch eine integrierte Schaltung nach Patentanspruch 1. Insbesondere ist diese integrierte Schaltung dadurch gekennzeichnet, daß sie einen Router beinhaltet, der den Datenverkehr zwischen dem Prozessor und den Modulen steuert. Durch die Verwendung des Routers wird die Ansteuerung der Module aus dem Prozessor ausgelagert. Der Prozessor spart daher Rechenzeit ein, die er für seine Hauptaufgaben verwenden kann. Der Router ist zwischen Prozessor und Module geschaltet und kann auf diese Weise Datenpakete mehreren Modulen sequentiell zuführen, ohne Rechenkapazität des Prozessors zu blockieren. Der Router nimmt Aufträge des Prozessors an und liefert dem Prozessor das Ergebnis des ausgeführten Auftrages. Ein Auftrag kann beispielsweise lauten: Das folgende Datenpaket soll in dieser Reihenfolge transformiert, moduliert und gefiltert werden. Der Router ist mit drei Modulen verbunden. Jedes Modul erfüllt eine spezielle Aufgabe. So können Datenpakete in Modul 1 z.B. gefiltert, in Modul 2 moduliert und in Modul 3 transformiert werden. Der Router erhält das zu bearbeitende Datenpaket vom Prozessor und führt es eigenständig sequentiell den Modulen 3, 2, 1 zu. Das Datenpaket ist danach gemäß dem Auftrag bearbeitet und wird dem Prozessor zugeführt. Der Prozessor hat auf diese Weise die Zeit für die Durchführung des Auftrages gespart und kann diese eingesparte Zeit für andere, nicht so triviale Aufgaben verwenden.

In einer bevorzugten Ausführungsform sind Prozessor und Router derart aufgebaut, daß vom Prozessor Datenpakete und zugehörige Anweisungen für einzelne Datenpakete spezielle, von den Modulen ausführbare Operationen in vorgegebener Abfolge durchzuführen zum Router übertragen werden. Der Router übernimmt die Steuerung der Abfolgen autark. Er koordiniert den Transport der Datenpakete von und zu den entsprechenden Modulen. Sind die Datenpakete nach den vorgegeben Anweisungen bearbeitetet, überträgt er sie dem Prozessor. Der Prozessor übernimmt somit die Rolle eines Auftraggebers, der zu jedem Datenpaket eine zugehörige Anweisung erstellt und dem Router überträgt. Der Router ist der Auftragnehmer, der die entsprechend der Anweisung bearbeiteten Datenpakete zu den entsprechenden Modulen überträgt. Die Anzahl der Module ist beschränkt, so daß auch die Anzahl der Anweisungen beschränkt ist. Die Realisierung des Routers ist somit auf einfache Weise mit z.B. einer Zuweisungstabelle möglich. Mit zwei Bits können vier Module addressiert werden, z.B. Modul 1 durch 01, Modul 2 durch 10 und Modul 3 durch 11. Eine Anweisung in Bits lautet beispielsweise 011011. Die ersten beiden Bits bedeuten, daß das Datenpaket erst dem Modul 1 zugeführt werden soll. Das dritte und das vierte Bit bedeuten, daß das Datenpaket nach Modul 1 Modul 2 zugeführt werden soll. Das fünfte und das sechste Bit bedeuten, daß das Datenpaket nach Modul 2 Modul 3 zugeführt werden soll. Bei der Anweisung 110110 sollen demnach die Module 3, 1, 2 sequentiell durchlaufen werden.

In einer weiteren bevorzugten Ausführungsform beinhaltet die integrierte Schaltung einen Speicher zum Zwischenspeichern von zu bearbeitenden Datenpaketen. Der Router ist mit dem Speicher verbunden. Der Router empfängt vom Prozessor beipielsweise gleichzeitig mehrere Datenpakete mit zugehörigen Anweisungen. Es ist durchaus möglich, daß verschiedene Datenpakete verschiedene Module durchlaufen und sich dabei eine zeitliche Überlappung der Zugriffs auf dasselbe Modul ergeben könnte. Um auszuschließen, daß ein Modul, das bereits ein Datenpaket bearbeitet, vom Router ein weiteres Datenpaket zur Bearbeitung erhält, was zu einer Kollision führen würde, ist der Speicher vorgesehen. Der Router weiß, welchem Modul er welches Datenpaket gesendet hat und von welchem Modul er bereits das entsprechend berabeitete Datenpaket wieder zurückerhalten hat. Er koordiniert den Datenpakettransfer eigenständig und ist dafür verantwortlich, daß keine Kollisionen auftreten. Bearbeitet ein Modul bereits ein Datenpaket, so speichert der Router ein in diesem Modul zu berabeitendes weiteres Datenpaket im Speicher zwischen. Das weitere Datenpaket wird erst zum Modul übertragen, wenn dieses wieder frei ist. Auch wird die Rechenkapazität der Module auf diese Weise optimal ausgenutzt.

In einer weiteren bevorzugten Ausführungsform beinhaltet der Router eine Steuereinheit, die eine Schnittstelle zum Prozessor aufweist. Über diese Schnittstelle werden Datenpakete und Anweisungen vom Prozessor zur Steuereinheit übertragen sowie bearbeitete Datenpakete von der Steuereinheit zum Prozessor übertragen. Die Steuereinheit trennt die empfangenen Datenpakete von den empfangenen Anweisungen. Die Anweisungen werden in der Steuereinheit ausgewertet, z.B. mittels der oben beschriebenen Zuweisungstabelle und anschließend werden die abgetrennten Datenpakete gesteuert durch die Steuereinheit in der entspechenden Abfolge zu den entsprechenden Modulen übertragen, ggf. zeitverzögert in Folge einer zwischenzeitlichen Speicherung im Speicher. Die Anweisungen werden z.B. in einem sog. Header zu den einzelnen Datenpaketen übertragen. Jeder Header beinhaltet beispielsweise auch Sychronisierungsbits. Dies vereinfacht die Kommunikation zwischen Prozessor und Steuereinheit.

In einer weiteren bevorzugten Ausführungsform beinhaltet der Router mehrere Schalter. Alle Schalter werden von der Steuereinheit angesteuert. Die Schalter sind derart angeordnet und miteinander verbunden, daß über die Schalter Datenpakete von jedem Modul zu jedem anderen Modul geschaltet weitergeleitet werden können. Die Steuereinheit trennt die empfangenen Datenpakete von den empfangenen Anweisungen, wertet die Anweisungen aus und überträgt die abgetrennten Datenpakete entsprechend den zugehörigen Anweisungen zu den entsprechenden Modulen, indem sie die Schalter entsprechend ansteuert. Durch die Verwendung der Schalter ist eine flexible und leicht modifizierbare Verbindungsmöglichkeit von der Steuereinheit mit den Modulen und den Modulen untereinander gegeben, wodurch sich die Anweisungen auf einfache Art und Weise umsetzen lassen. Die Schalter sind Standardbauelemente, z.B. 2x2 Schalter, die wenig Chipfläche beanspruchen. Die Anzahl der Schalter ist auf die Anzahl der Module abgestimmt. Bei vier Modulen und einem Speicher sind beispielsweise nur acht 2x2 Schalter erforderlich.

In einer weiteren bevorzugten Ausführungsform überträgt die Steuereinheit die bearbeiteten Datenpaketen zusammen mit Zusatzinformationen, beinhaltend eine Kennzeichnung der bearbeiteten Datenpakete über die Schnittstelle zum Prozessor. Für die Übertragung kann ebenfalls ein Header verwendet werden. Auf diese Weise kann in beiden Richtungen, vom Prozessor zur Steuereinheit und von der Steuereinheit zum Prozessor dasselbe Format, Header + zugehöriges Datenpaket, verwendet werden. Der Header beinhaltet für beide Richtungen Synchronisationsbits, für die Richtung zur Steuereinheit zusätzlich Anweisungen und für die Richtung zum Prozessor Kennzeichnungen. Dies vereinfacht die Kommunikation zwischen Prozessor und Steuereinheit.

Ein Ausführungsbeispiel der Erfindung wird im folgenden unter Zuhilfenahme von zwei Figuren erläutert. Es zeigen:
- Fig. 1: eine schematische Darstellung eines Ausschnitts einer erfindungsgemäßen integrierten Schaltung und
- Fig. 2: eine schematische Darstellung eines erfindungsgemäßen Routers.

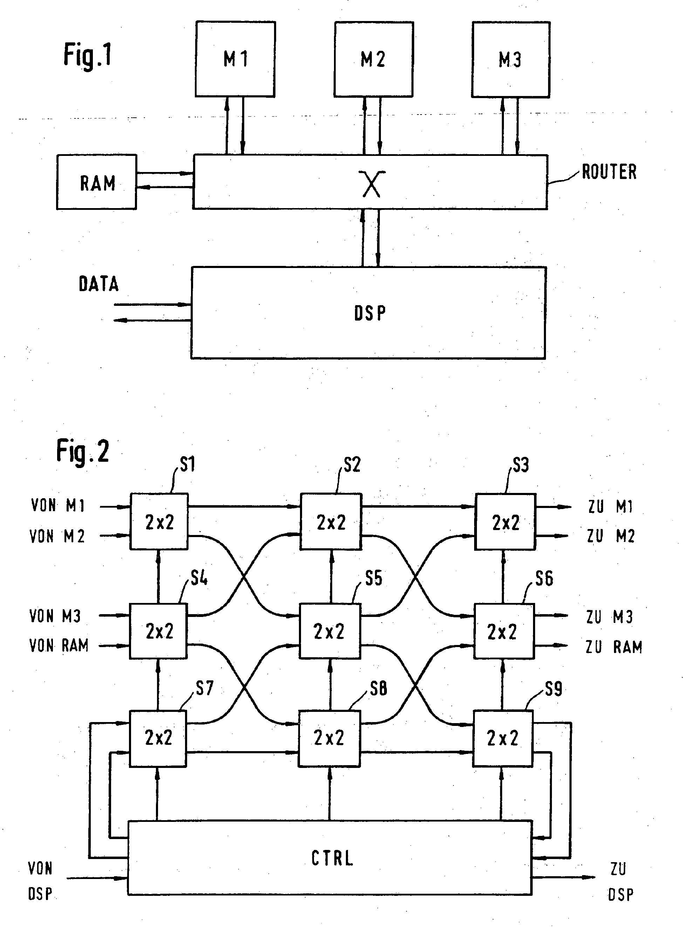

Das Ausführungsbeispiel wird nun zunächst unter Zuhilfenahme von Fig. 1 erläutert. Fig. 1 zeigt eine schematische Darstellung eines Ausschnitts einer erfindungsgemäßen integrierten Schaltung. Die integrierte Schaltung soll beispielsweise als ASIC verwendet werden. Im Kern der integrierten Schaltung ist ein Prozessor DSP angeordnet. Der Prozessor DSP ist als digitaler Signalprozessor ausgeführt. Um den Prozessor DSP herum sind verschiedene Einheiten angeordnet, beispielsweise Ein-/Ausgabeeinheiten als Schnittstelle zum Empfangen und Übertragen von Daten, Analog/Digital-Umsetzer zum Umsetzen von analogen Signalen in digitale Signale, die vom Prozessor DSP verarbeitet werden können und Speicher, auf die der Prozessor DSP zugreift um z.B. Daten zwischenzuspeichern oder Software herunterzuladen. Der Prozessor DSP erhält Daten von außerhalb der integrierten Schaltung und hat die Aufgabe diese Daten entsprechend zu bearbeiten. Dazu sind komplexe Schritte notwendig. Der Prozzessor muß die Daten verschiedenartigen Prozessen unterwerfen. Einfachere Prozesse, z.B. die Filterung eines Datenpaket nach einer vorgegebenen Tiefpaßfunktion sind Routineaufgaben, die aus dem Prozessor DSP ausgelagert sind, um die Rechenkapazität des Prozessors damit nicht zu belasten. Um den Prozessor herum sind zu diesem Zweck drei Module M1, M2, M2 angeordnet, die spezielle Operationen ausführen. Diese Operationen sind beispielsweise Filterung, Modulation und Transformation. Die Operationsvorschriften sind fest vorgegeben. Jedes Modul arbeitet nach einer Operationsvorschrift. So ist z.B. Modul M1 für die Filterung von Daten vorgesehen, Modul M2 für die Transformation von Daten und Modul M3 für die Modulation von Daten. Modul M1 kann z.B. durch ein FIR-Filter realisiert werden, Modul M2 z.B. durch eine Einrichtung zur Fouriertransformation und Modul 3 z.B. durch ein QAM- oder MPEG-Kodierer. Die Anzahl der vorhandenen Module richtet sich nach den Aufgaben, die der Prozesssor ausführen können soll. So können beispielsweise auch zwanzig Module mit verschiedenen und/oder zum Teil gleichen Operationsvorschriften um den Prozessor DSP herum angeordnet werden. Zwischen die Module M1, M2, M3 und dem Prozessor DSP ist ein Router ROUTER geschaltet. Der Router ROUTER ist mit allen Modulen M1, M2, M3 und dem Prozessor DSP verbunden. Der Router ROUTER hat die Aufgabe, den Datenverkehr zwischen dem Prozessor DSP und den Modulen M1, M2, M3 zu steuern.

Der Prozessor DSP lagert einfache Prozesse aus, die in den Modulen M1, M2, M3 abgearbeitet werden sollen. Der Prozessor DSP überträgt dazu Datenpakete und zugehörige Anweisungen für einzelne Datenpakete spezielle, von den Modulen M1, M2, M3 ausführbare Operationen in vorgegebener Abfolge durchzuführen zum Router ROUTER. Der Router ROUTER hat dann die Aufgabe die Steuerung der Abfolgen autark zu koordinieren, die Datenpakete den entsprechenden Modulen M1, M2, M3 zu übertragen und die nach den vorgegeben Anweisungen bearbeiteten Datenpakete dem Prozessor DSP zu übertragen.

Der Router ROUTER ist zusätzlich mit einem Speicher RAM, z.B. ein sog. Read Access Memory, zum Zwischenspeichern von zu bearbeitenden Datenpaketen verbunden. Zu bearbeitende Datenpakete, für die eine spezielle Operation in einem bereits Datenpakete bearbeitenden Modul M1, M2, M3 durchzuführen ist, werden über den Router ROUTER im Speicher RAM zwischengespeichert. Beispielsweise werden vom Prozessor zwei Datenpakete 1 und 2 zum Router ROUTER übertragen, die beide die Module M1, M2, M3 sequentiell durchlaufen sollen. Datenpaket 1 wird vom Router ROUTER zu Modul 1 übertragen, während Datenpaket 2 für die Dauer der Bearbeitung von Datenpaket 1 im Modul M1 im Speicher RAM zwischengespeichert wird. Wird das bearbeitete Datenpaket 1 vom Modul M1 zum Router ROUTER übertragen, so wird es direkt zur weiteren Bearbeitung zum Modul M2 weitergeleitet. Das Datenpaket M2 wird dann aus dem Speicher RAM ausgelesen und zum Modul M1 übertragen. Nun werden die Datenpakete 1 und 2 gleichzeitig bearbeitet, Datenpaket 1 in Modul M1 und Datenpaket 2 in Modul M2. Ist die Bearbeitung von Datenpaket 2 in Modul M1 schneller abgeschlossen als die Bearbeitung von Datenpaket 1 in Modul 2, so wird Datenpaket 2 wieder im Speicher RAM zwischengespeichert, und zwar solange bis Modul M2 wieder frei ist. Ist hingegen die Bearbeitung von Datenpaket 1 in Modul M2 schneller abgeschlossen als die Bearbeitung von Datenpaket 2 in Modul M1, so wird Datenpaket 1 direkt an Modul M3 weitergeleitet und Datenpaket 2 direkt an Modul M2. Das durch Modul M3 bearbeitete Datenpaket 1 wird zum Prozessor DSP übertragen. Datenpaket 2 wird dann auch Modul M3 zugeführt und nach der Bearbeitung an den Prozessor DSP übertragen. Das Ausführungsbeispiel wird nun weiter unter Zuhilfenahme von Fig. 2 erläutert. Fig. 2 zeigt eine schematische Darstellung eines erfindungsgemäßen Routers ROUTER.

Der Router ROUTER beinhaltet eine Steuereinheit CTRL, die eine Schnittstelle zum Prozessor DSP aufweist und über diese Schnittstelle Datenpakete und Anweisungen vom Prozessor DSP empfängt und bearbeitete Datenpakete zum Prozessor DSP überträgt. Die Steuereinheit CTRL trennt die empfangenen Datenpakete von den empfangenen Anweisungen und überträgt die abgetrennten Datenpakete entsprechend den zugehörigen Anweisungen zu den entsprechenden Modulen M1, M2, M3.

Dazu beinhaltet der Router ROUTER mehrere Schalter S1, S2, S3, S4, S5, S6, S7, S8, S9, die alle von der Steuereinheit CTRL angesteuert werden. Die Schalter S1, S2, S3, S4, S5, S6, S7, S8, S9 sind derart angeordnet und miteinander verbunden sind, daß über die Schalter S1, S2, S3, S4, S5, S6, S7, S8, S9 Datenpakete von jedem Modul M1, M2, M3 zu jedem anderen Modul M1, M2, M3 geschaltet weitergeleitet werden können.

Die Schalter S1, S2, S3, S4, S5, S6, S7, S8, S9 sind allesamt 2x2 Schalter mit jeweils zwei Eingängen und zwei Ausgängen. Jedes Modul M1, M2, M3 hat einen Eingang und einen Ausgang. Der Speicher RAM hat einen Eingang und einen Ausgang. Der erste Eingang von Schalter S1 ist mit dem Ausgang von Modul M1 verbunden. Der zweite Eingang von Schalter S1 ist mit dem Ausgang von Modul M2 verbunden. Der erste Ausgang von Schalter S1 ist mit dem ersten Eingang von Schalter S2 verbunden. Der zweite Ausgang von Schalter S1 ist mit dem ersten Eingang von Schalter S5 verbunden. Schalter S1 wird von der Steuereinheit CTRL derart angesteuert, daß das Ausgangssignal von Modul M1 am ersten Ausgang von Schalter S1 und das Ausgangssignal von Modul M2 am zweiten Ausgang von Schalter S1 anliegt oder daß das Ausgangssignal von Modul M1 am zweiten Ausgang von Schalter S1 und das Ausgangssignal von Modul M2 am ersten Ausgang von Schalter S1 anliegt. Die Schalter S2 bis S9 werden auf vergleichbare Art und Weise von der Steuereinheit CTRL angesteuert. Der erste Eingang von Schalter S4 ist mit dem Ausgang von Modul M3 verbunden. Der zweite Eingang von Schalter S4 ist mit dem Ausgang vom Speicher RAM verbunden. Der erste Ausgang von Schalter S4 ist mit dem zweiten Eingang von Schalter S2 verbunden. Der zweite Ausgang von Schalter S4 ist mit dem ersten Eingang von Schalter S8 verbunden. Der erste und der zweite Eingang von Schalter S7 sind mit der Steuereinheit CTRL verbunden, um abgetrennte Datenpakete an Schalter S7 zu übertragen. Der erste Ausgang von Schalter S7 ist mit dem zweiten Eingang von Schalter S5 verbunden. Der zweite Ausgang von Schalter S4 ist mit dem zweiten Eingang von Schalter S8 verbunden. Der erste Eingang von Schalter S3 ist mit dem ersten Ausgang von Schalter S2 verbunden. Der zweite Eingang von Schalter S3 ist mit dem ersten Ausgang von Schalter S5 verbunden. Der erste Ausgang von Schalter S3 ist mit dem Eingang von Modul M1 verbunden, Der zweite Ausgang von Schalter S3 ist mit dem Eingang von Modul M2 verbunden. Der erste Eingang von Schalter S6 ist mit dem zweiten Ausgang von Schalter S2 verbunden. Der zweite Eingang von Schalter S6 ist mit dem ersten Ausgang von Schalter S8 verbunden. Der erste Ausgang von Schalter S6 ist mit dem Eingang von Modul M3 verbunden. Der zweite Ausgang von Schalter S6 ist mit dem Eingang vom Speicher RAM verbünden. Der erste Eingang von Schalter S9 ist mit dem zweiten Ausgang von Schalter S5 verbunden. Der zweite Eingang von Schalter S9 ist mit dem zweiten Ausgang von Schalter S8 verbunden. Der erste und zweite Ausgang von Schalter S9 sind mit der Steuereinheit CTRL verbunden, um bearbeitete Datenpakete zur Steuereinheit CTRL zu übertragen.

Die Steuereinheit CTRL trennt die empfangenen Datenpakete von den empfangenen Anweisungen, z.B. indem sie sich auf die Synchronisationssignale im Header synchronisiert und den Header mittels eines Zeitmultiplexers vom nachfolgenden Datenpaket abspaltet. Der Header wird ausgewertet, z.B. über eine Zuweisungstabelle, die im Speicher abgelegt sein kann und in der die Schritte vorgegeben sind, die für entsprechende Anweisungen erforderlich sind. Die nachfolgenden Datenpakete werden beispielsweise abwechselnd den Eingängen 1 und 2 von Schalter S7 zugeführt. Beispielsweise empfängt die Steuereinheit CTRL vom Prozessor die Anweisung 011110. In der Zuweisungtabelle ist dann abgespeichert, daß für 01 die Schalter S7, S5, S3 derart angesteuert werden müssen, daß ein am ersten oder zweiten Eingang von Schalter S7 anliegendes Datenpaket über den Schalter S5 und den Schalter S3 zum Modul M1 gelangt. Das im Modul M1 bearbeitete Datenpaket wird am ersten Eingang von Schalter S1 erscheinen, so daß in der Zuweisungstabelle die weitere Ansteuerung entnehmbar ist, daß für 11 die Schalter S1, S2, S6 derart angesteuert werden müssen, daß das am ersten Eingang von Schalter S1 anliegende Datenpaket über Schalter S2 und S6 zum Modul M3 gelangt. Das im Modul M3 bearbeitete Datenpaket wird am ersten Eingang von Schalter S4 erscheinen, so daß in der Zuweisungstabelle die weitere Ansteuerung entnehmbar ist, daß für 10 die Schalter S4, S2, S3 derart angesteuert werden müssen, daß das am ersten Eingang von Schalter S4 anliegende Datenpaket über Schalter S2 und S3 zum Modul M2 gelangt. Das im Modul M2 bearbeitete Datenpaket wird am zweiten Eingang von Schalter S1 erscheinen, so daß in der Zuweisungstabelle die weitere Ansteuerung entnehmbar ist, daß zur Übertragung an die Steuereinheit CTRL die Schalter S1, S5, S9 derart angesteuert werden müssen, daß das am zweiten Eingang von Schalter S1 anliegende Datenpaket über Schalter S5 und S9 zur Steuereinheit CTRL gelangt. Sollten sich zeitliche Überschneidungen ergeben, z.B. wenn zwei Datenpakete gleichzeitig von ein und demselben Modul bearbeitet werden sollen, so wird ein Datenpaket über die Schalter S7, S8, S6 in den Speicher RAM eingeschrieben und über die Schalter S4, S2, S3 oder S4, S2, S6 wieder aus dem Speicher RAM ausgelesen und zum entsprechenden Modul übertragen, wenn dieses wieder frei ist. Es können auch Alternativpfade geschaltet werden. Z.B. sollen gleichzeitig ein Datenpaket vom Speicher RAM zum Modul M3 übertragen werden und ein anderes Datenpaket von Modul M1 zum Modul M2. Dann erfolgt erstere Übertragung über die Schalter S4, S2, S6 und letztere über die Schalter S1, S5, S3. Die Verbindung über die Schalter S1, S5, S3 stellt dabei einen Alternativpfad zur Verbindung über die Schalter S1, S2, S3 dar. Dieser Alternativpfad wird automatisch von der Steuereinheit CTRL gewählt, um erstens Kollisionen zu vermeiden und zweitens die Anweisungen so rasch wie möglich abzuarbeiten. Die Steuereinheit CTRL ist z.B. durch einen Mikroprozessor in einer Minimalversion realisert.

Die Steuereinheit CTRL überträgt die bearbeiteten Datenpaketen zum Prozessor DSP. Das Format für die Übertragung von Informationen zum Prozessor DSP ist beispielsweise auch aus Header + (bearbeitete) Datenpakete aufgebaut. Die Steuereinheit CTRL überträgt die bearbeiteten Datenpaketen dann vorteilhafterweise zusammen mit Zusatzinformationen, beinhaltend eine Kennzeichnung der bearbeiteten Datenpakete über die Schnittstelle zum Prozessor DSP. Der Prozessor DSP erhält die bearbeiteten Datenpakete in der gleichen Form, wie er sie der Steuereinheit CTRL übertragen hat. Im Header sind beispielsweise sowohl bei der Übertragung vom Prozessor DSP zur Steuereinheit CTRL als auch bei der Übertragung von der Steuereinheit CTRL zum Prozessor DSP nach den Synchronisationsbits drei Bits zur Kennzeichnung der Datenpakete vorgesehen. Die Kennzeichenbits werden beispielsweise einfach durchnummeriert. Datenpaket 1 erhält die Kennung 001, Datenpaket 2 die Kennung 010, usw.. Datenpaket 9 erhält Kennung 001, da zwischenzeitlich Datenpaket 1 abgearbeitet wurde und die Kennung dadurch wieder frei wurde, Datenpaket 10 Kennung 010, usw.. Die bearbeiteten Datenpakete können auch im Speicher RAM zwischengespeichert und erst auf Anforderung durch den Prozessor DSP wieder ausgelesen und zum Prozessor DSP übertragen werden. Dies erspart dem Prozessor DSP eine Zwischenspeicherung.

## Patentansprüche

1. Integrierte Schaltung mit einem Prozessor (DSP) zur Bearbeitung von Daten und mindestens zwei, unterschiedliche Operationsvorschritten ausführenden Modulen (M1, M2, M3) zur Bearbeitung von vom Prozessor ausgewählten Datenpaketen , **dadurch gekennzeichnet**
**daß** die integrierte Schaltung einen Router ( ROUTER ) beinhaltet, der mit allen Modulen (M1, M2, M3) und dem Prozessor (DSP) verbunden ist, zwecks Steuerung des Datenverkehrs zwischen dem Prozessor (DSP) und den Modulen (M1, M2, M3),
weiterhin **dadurch gekennzeichnet,**
**daß** der Router geeignet ist, vom Prozessor ( DSP ) Datenpakete und zugehörige Anweisungen, für einzelne Datenpakete spezielle, von den Modulen (M1, M2, M3) ausführbare Operationen in vorgegebener Abfolge durchzuführen, zu empfangen, die Steuerung der Abfolgen autark zu koordinieren, die Datenpakete den entsprechenden Modulen (M1, M2, M3) zu übertragen und die nach den vorgegeben Anweisungen bearbeiteten Datenpakete dem Prozessor ( DSP) zu übertragen.

2. Integrierte Schaltung nach Anspruch 1, **dadurch gekennzeichnet, daß** die integrierte Schaltung einen Speicher ( RAM ) zum Zwischenspeichern von zu bearbeitenden Datenpaketen beinhaltet, daß der Router ( ROUTER ) mit dem Speicher verbunden ist, und daß der Router ( ROUTER ) geeignet ist, zu bearbeitende Datenpakete, für die eine spezielle Operation in einem bereits Datenpakete bearbeitenden Modul (M1, M2, M3) durchzuführen ist, im Speicher (RAM) zwischenzuspeichern.

3. Integrierte Schaltung nach einem der Ansprüche 1 bis 2, **dadurch gekennzeichnet, daß** der Router ( ROUTER ) eine Steuereinheit ( CTRL ) beinhaltet, die eine Schnittstelle zum Prozessor ( DSP ) aufweist und über diese Schnittstelle Datenpakete und Anweisungen vom Prozessor ( DSP ) empfangen kann und bearbeitete Datenpakete zum Prozessor ( DSP ) übertragen kann, und daß die Steuereinheit ( CTRL ) geeignet ist, die empfangenen Datenpakete von den empfangenen Anweisungen zu trennen und die abgetrennten Datenpakete entsprechend den zugehörigen Anweisungen zu den entsprechenden Modulen (M1, M2, M3) zu übertragen.

4. Integrierte Schaltung nach Anspruch 3, **dadurch gekennzeichnet, daß** der Router ( ROUTER ) mehrere Schalter (S1, S2, S3, S4, S5, S6, S7, S8, S9) beinhaltet, daß alle Schalter (S1, S2, S3, S4, S5, S6, S7, S8, S9) von der Steuereinheit ( CTRL ) angesteuert werden, daß die Schalter ( S1, S2, S3, S4, S5, S6, S7, S8, S9) derart angeordnet und miteinander verbunden sind, daß über die Schalter (S1, S2, S3, S4, S5, S6, S7, S8, S9) Datenpakete von jedem Modul (M1, M2, M3) zu jedem anderen Modul (M1, M2, M3) geschaltet weitergeleitet werden können, und daß die Steuereinheit ( CTRL ) geeignet ist, die empfangenen Datenpakete von den empfangenen Anweisungen zu trennen und die abgetrennten Datenpakete über die Schalter ( S1, S2, S3, S4, S5, S6, S7, S8, S9 ) entsprechend den zugehörigen Anweisungen zu den entsprechenden Modulen (M1, M2, M3) zu übertragen.

5. Integrierte Schaltung nach Anspruch 3 oder 4, **dadurch gekennzeichnet, daß** die Steuereinheit ( CTRL ) geeignet ist, die bearbeiteten Datenpaketen zusammen mit Zusatzinformationen, beinhaltend eine Kennzeichnung der bearbeiteten Datenpakete über die Schnittstelle zum Prozessor ( DSP ) zu übertragen.

6. Integrierte Schaltung nach einem der vorherigen Ansprüche, **dadurch gekennzeichnet, daß** ein Modul (M1) geeignet ist, eine Filterung durchzuführen, daß ein Modul ( M2) geeignet ist, eine Transformation durchzuführen, und daß ein Modul ( M3 ) geeignet ist, eine Modulation durchzuführen.

## Claims

1. Integrated circuit comprising a processor (DSP) for processing data and at least two modules (M1, M2, M3), executing different operating instructions, for processing data packets selected by the processor, **characterized in that**
the integrated circuit comprises a router (ROUTER) connected to all modules (M1, M2, M3) and to the processor (DSP) for controlling the data traffic between the processor (DSP) and the modules (M1, M2, M3),
further **characterized in that**
the router is capable of receiving from the processor (DSP) data packets and associated instructions to perform specific operations executable by the modules (M1, M2, M3) in a predetermined sequence for individual data packets, of coordinating the control of the sequences on its own, of transmitting the data packets to the corresponding modules (M1, M2, M3) and of transmitting the data packets processed according to the predetermined instructions to the processor (DSP).

2. Integrated circuit according to claim 1, **characterized in that** the integrated circuit comprises a memory (RAM) for buffering data packets to be processed, that the router (ROUTER) is connected to the memory, and that the router (ROUTER) is capable of buffering data packets to be processed, for which a specific operation is to be performed in a module (M1, M2, M3) that is already processing data packets, in the memory (RAM).

3. Integrated circuit according to one of the claims 1 to 2, **characterized in that** the router (ROUTER) comprises a control unit (CTRL), which comprises an interface with the processor (DSP) and is capable of receiving data packets and instructions from the processor (DSP) via this interface and of transmitting processed data packets to the processor (DSP), and that the control unit (CTRL) is capable of separating the received data packets from the received instructions and of transmitting the separated data packets to the corresponding modules (M1, M2, M3) according to the associated instructions.

4. Integrated circuit according to claim 3, **characterized in that** the router (ROUTER) comprises several switches (S1, S2, S3, S4, S5, S6, S7, S8, S9), that all switches (S1, S2, S3, S4, S5, S6, S7, S8, S9) are controlled by the control unit (CTRL), that the switches (S1, S2, S3, S4, S5, S6, S7, S8, S9) are arranged and interconnected such that data packets can be passed on from each module (M1, M2, M3) to any other module (M1, M2, M3) via the switches (S1, S2, S3, S4, S5, S6, S7, S8, S9) in a switched manner, and that the control unit (CTRL) is capable of separating the received data packets from the received instructions and of transmitting the separated data packets via the switches (S1, S2, S3, S4, S5, S6, S7, S8, S9) to the corresponding modules (M1, M2, M3) according to the associated instructions.

5. Integrated circuit according to claim 3 or 4, **characterized in that** the control unit (CTRL) is capabloe of transmitting the processed data packets together with additional information, including an identification of the processed data packets, to the processor (DSP) via the interface.

6. Integrated circuit according to one of the preceding claims, **characterized in that** one module (M1) is capable of performing a filtering, one module (M2) is capable of performing a transformation, and one module (M3) is capable of performing a modulation.

## Revendications

1. Circuit intégré avec un processeur (DSP) pour le traitement de données et au moins deux modules (M1, M2, M3) différents effectuant des étapes d'opérations, pour le traitement de paquets de données sélectionnés par le processeur, **caractérisé en ce que** le circuit intégré contient un routeur (ROUTER) relié avec tous les modules (M1, M2, M3) et le processeur (DSP), afin de contrôler le trafic de données entre le processeur (DSP) et les modules (M1, M2, M3), **caractérisé en outre en ce que** le routeur est conçu pour recevoir les paquets de données du processeur (DSP) et les instructions correspondantes ordonnant d'effectuer les opérations spéciales exécutables par les modules (M1, M2, M3) pour certains paquets de données dans un ordre prédéterminé, pour coordonner de manière autonome les séquences, pour transmettre les paquets de données aux modules correspondants (M1, M2, M3) et pour transmettre les paquets de données traités selon les instructions prédéterminées au processeur (DSP).

2. Circuit intégré selon la revendication 1, **caractérisé en ce que** le circuit intégré contient une mémoire (RAM) pour l'enregistrement intermédiaire de paquets de données à traiter, **en ce que** le routeur (ROUTER) est relié avec la mémoire et **en ce que** le routeur (ROUTER) est conçu pour enregistrer dans la mémoire (RAM) les paquets de données à traiter, pour lesquels une opération spéciale doit être effectuée dans un module (M1, M2, M3) traitant déjà les paquets de données.

3. Circuit intégré selon l'une des revendications 1 à 2, **caractérisé en ce que** le routeur (ROUTER) contient une unité de commande (CTRL) qui comprend une interface avec le processeur (DSP) et peut recevoir, par l'intermédiaire de cette interface, des paquets de données et des instructions du processeur (DSP) et peut transmettre les paquets de données traités au processeur (DSP) et **en ce que** l'unité de commande (CTRL) est conçue pour séparer les paquets de données reçus des instructions reçues et pour transmettre les paquets de données séparés en fonction des instructions correspondantes aux modules correspondants (M1, M2, M3).

4. Circuit intégré selon la revendication 3, **caractérisé en ce que** le routeur (ROUTER) contient plusieurs commutateurs (S1, S2, S3, S4, S5, S6, S7, S8, S9), **en ce que** tous les commutateurs (S1, S2, S3, S4, S5, S6, S7, S8, S9) sont commandés par l'unité de commande (CTRL), **en ce que** les commutateurs (S1, S2, S3, S4, S5, S6, S7, S8, S9) sont disposés et reliés entre eux de façon à ce que, par l'intermédiaire des commutateurs (S1, S2, S3, S4, S5, S6, S7, S8, S9), les paquets de données puissent être transmis de manière commutée de chaque module (M1, M2, M3) à chaque autre module (M1, M2, M3) et **en ce que** l'unité de commande (CTRL) est conçue pour séparer les paquets de données reçus des instructions reçues et pour transmettre les paquets de données séparés par l'intermédiaire des commutateurs (S1, S2, S3, S4, S5, S6, S7, S8, S9) en fonction des instructions correspondantes aux modules correspondants (M1, M2, M3).

5. Circuit intégré selon la revendication 3 ou 4, **caractérisé en ce que** l'unité de commande (CTRL) est conçue pour transmettre les paquets de données traités avec des informations supplémentaires contenant une identification des paquets de données traités par l'intermédiaire de l'interface avec le processeur (DSP).

6. Circuit intégré selon l'une des revendications précédentes, **caractérisé en ce qu'**un module (M1) est conçu pour effectuer un filtrage, **en ce qu'**un module (M2) est conçu pour effectuer une transformation et **en ce qu'**un module (M3) est conçu pour effectuer une modulation.
